# EUROPEAN PATENT SPECIFICATION

(11) **EP 3 065 138 B1**
(45) Date of publication and mention of the grant of the patent: **03.10.2018**
(21) Application number: 14858485.7
(22) Date of filing: 18.04.2014
(51) Int. Cl.: G21C 7/12

(54) **DRIVE OF AN EMERGENCY SAFETY ROD**
ANTRIEB EINER NOTFALLSICHERHEITSSTANGE
ACTIONNEUR DE TIGE DE PROTECTION EN CAS D'ACCIDENT

(30) Priority: 31.10.2013 RU 2013148440
(43) Date of publication of application: 07.09.2016
(73) Proprietor: Joint Stock Company "Akme-Engineering", Moscow 115035 (RU)
(72) Inventor: VAKHRUSHIN, Mikhail Petrovich, Moscow 141102 (RU); GOLOVIN, Ivan Aleksandrovich, Moskovskaya obl. 142118 (RU); PODIN, Aleksey Ivanovich, Moskovskaya obl. 142110 (RU); USMANOV, Anton Erikovich, Moskovskaya obl. 142105 (RU)
(74) Representative: Mitev, Mitko Karushkov
(86) International application number: PCT/RU2014/000283
(87) International publication number: WO 2015/065234

(56) References cited:
- RU-C- 757 020
- RU-C- 1 364 099
- RU-C- 1 748 544
- RU-C1- 2 107 341
- RU-U1- 52 243
- US-A- 3 494 827
- US-A- 3 494 827
- US-A- 4 124 442

## Description

### Field of the invention

The invention relates to nuclear engineering, in particular, to methods of nuclear reactors operation on fast neutrons in the alarm input and negative reactivity modes, as well as to nuclear reactors control and protection system.

### Related art

Dual-reactor plant with liquid metal coolant (eutectic lead-bismuth alloy) in the first circuit and working environment (water-steam) in the second circuit is designed to convert nuclear energy into thermal energy of saturated steam.

An emergency shutdown drive is a control and protection device aimed to perform safety function, i. e. fast automatic and remote manual termination of a nuclear fission chain reaction in the reactor core of the reactor plant by means of rapid introduction of a regulating unit, an emergency shutdown rod, to the reactor plant core.

Modern control and protection systems of reactors impose strict requirements to such actuating mechanisms as control rod introduction to the core and reliability of the emergency protection function execution, i.e. failure-free control rod introduction to the core.

An actuating mechanism BN-350 of a reactor emergency protection elements is currently in use (Mirenkov F. M. et. al. Actuating mechanisms of sodium-cooled fast reactors emergency protection elements, Atomizdat, 1980, pp. 51-58). The mechanism consists of two separate assemblies: a servo drive and a leak-proof stand with a bar and rack mechanism.

The stand and the bar are fastened to the structure tube flange of the reactor central column. The stand consists of the stand itself and the bar with a tip and grips. There are guide bars in the lower part of the stand and a damping spring in the upper one. A stem and a lower tube are located inside the bar, at that the tube is connected by recess with an eccentric that controls the grips.

The rack mechanism includes a rack pair, roller guides, an accelerating spring and a case with inductive limit switches.

A servo drive represents a separate field assembly a nd is installed on the base plate support. The servo drive gearbox output shaft is connected with the input shaft of the rack mechanism using a gear unit coupling. The servo drive consists of a DC electric motor, a gearbox of worm and parallel shaft type, an electric magnet, a proximity sensor, a conical friction clutch with control handles and a spindle nut.

The electric motor shaft is connected with the gearbox input shaft using a four-way link motion coupling.

Rotation is transferred to the drive friction half-coupling using a four-way coupling, a pair of cylindrical gears and a worm gear pair through ball-type connectors. The last one transfers the motion to the driven half-coupling and to the outlet shaft through two pairs of cylindrical gears, provided that the electric magnet is switched on. Necessary bite point is created at the friction coupling by the electric magnet through magnet frame, leverage, cross-heads with springs and axial bearings in the cross-head. The motion from the servo drive is transferred to the seal assembly shaft through a gear unit coupling, then to rack pair that transforms rotating motion to reciprocating motion of the bar with grips and the reactor emergency protection mechanism.

However, the structure of the actuating mechanism has some disadvantages. The mechanism consists of two assemblies, has complex kinematics as the motor is asynchronous with no regulation. Clutching is performed through a friction coupling with separate electric magnet. The friction coupling clutching reliability can be reduced due to ingress of lubricants, foreign matters, for example, during the operation when the friction surfaces are worn out. The mechanism is difficult-to-make and has large dimensions.

An actuating mechanism BN-600 of a reactor emergency protection elements is also currently in use (Mirenkov F. M. et. al. Actuating mechanisms of sodium-cooled fast reactors emergency protection elements, Atomizdat, 1980, pp. 62-71). Kinematic scheme, as well as actuating mechanism scheme for the regulating unit consists of two kinematic chains: a bar servo drive and a grips servo drive. The first one consists of an electric drive, upper, intermediate and lower gearboxes, a torsion shaft, an electromagnetic coupling, an overspeed coupling, a rack pair, a bar with grips, a proximity sensor as well as accelerating and damping springs.

The grips servo drive kinematic chain includes an electric motor, a gearbox of worm and parallel shaft type, a swing pipe, a pulse sensor, a hollow shaft with eccentric and a test pin.

BN-600 actuating mechanism of a reactor emergency protection elements has similar construction as BN-350 actuating mechanism of a reactor emergency protection elements. The dimensions of the construction were reduced; however, the kinematics became more complex. Kinematics complication lids to reduction of the actuating mechanism reliability.

Besides, use of noncontact electromagnetic coupling instead of friction magnetic coupling creates electromagnetic field, and if the resisting moment of the driven rotor increases, the teeth of the driven rotor shift against the teeth of the drive rotor about some angle. And if a load appears on the driven rotor shaft so that the shift between the teeth exceeds the limit value, sliding (skip) will happen. The rotors falling out of synchronism and torque transfer stops.

Besides, the moment of inertia of the rotating parts attached to the gear increases the time of rod drop. One more disadvantage is high power consumption of the coupling.

### Summary of the invention

The invention solves the objective of reducing the time of negative reactivity introduction to the reactor core if emergency occurs, increase of the emergency shutdown rod drive construction reliability and, as a result, safety and reliability of the reactor plant as a whole.

Technical result of the claimed construction of the nuclear reactor emergency shutdown rod drive is as follows:
- ensuring reliability of the drive kinematics operation;
- reducing the time of kinematic circuit breaking and, correspondingly, reducing the time of introduction of the absorbing rod, if emergency situation or shutdown occurs;
- ensuring reliability of blocking the reverse motion of the rail with the absorbing rod (jump) when the absorber rod is discharged, excluding the rack gear rotation in the direction of lifting due to overspeed coupling.
- exclusion of complex regulation and combined adjustment of the electric magnet-gear type coupling system;
- decrease of the drive dimensions.

The construction of the absorber rod drive of a nuclear reactor protection system that includes an electric drive, a gearbox and a rack mechanism was proposed to solve this objective. The electric drive includes a brushless motor, where stator is installed inside the motor housing and rotor is rigidly connected with the electric drive shaft. Noncontact permanent magnet motor is used as a brushless motor. The electric drive shaft is installed using frictionless bearings.

Rotor of noncontact rotating transformer of sine-cosine type is installed at the electric drive shaft. Electromagnetic brake of normally closed type is installed at that shaft.

A gear-type rack is installed at the rack mechanism axis in order to ensure reciprocating motion of the absorbing rod of the control and protection system using a rack gear that transforms rotating motion to reciprocating one.

The gear-type rack of the rack mechanism is installed in the guide rails of the rack mechanism housing. A high-coercivity magnet is installed in the upper part of the rack; its protective sleeve is used as a guide rail. The magnet is installed in order to send signals to inductive limit switches for monitoring of extreme positions of the gear-type rack with absorber rod of the control and protection system. The inductive limit switches are installed outside the rack mechanism housing.

Upper edge of the spring of the gear-type rack discharge thrusts against the rack mechanism housing cover, at that lower edge of the spring thrusts against the magnet case.

A clutch gear-type electromagnetic coupling is installed at the inlet shaft of the mechanism; its housing is fixed in the internal space of the rack mechanism. At that a gear-type half-coupling is fixed at the input element of the electromagnetic coupling, it is rigidly connected with the overspeed coupling holder, at that the overspeed coupling hub is fixed at the shaft.

The electric drive axis is parallel to the gear-type rack axis.

Discharge of the absorber rod of the control and protection system is performed at breaking of the kinetic circuit.

The spring of the gear-type rack discharge can consist of several elements, connected to one another with special liners. It permits to regulate the drive power characteristics and makes manufacturing cheaper.

Internal space of the drive of the emergency shutdown absorbing rod is made leak-proof. Connections of major units have sealing elements made of a radiation resistant material.

The electric motor stator, installed in the electric drive housing, ix fixed in order to avoid rotation and axial motion.

The noncontact torque motor ensures creating the torque moment on the shaft with required speed and torques.

The noncontact rotating transformer of sine-cosine type serves as a noncontact sensor of the electric motor rotor position.

If power supply of the electric motor is missing, the electromagnetic break does not allow the shaft rotation, as a result, moving of the gear-type rack with the absorber rod of the control and protection system is excluded.

The gear-type half-coupling is intended for torque transfer from the electric drive to the rack mechanism. The half-coupling is fixed at the input element of the electromagnetic coupling, it serves as an overspeed coupling holder.

The overspeed coupling prevents jumping of the absorber rod of the control and protection system and excludes its upward movement caused by external dynamic loads when the electromagnetic coupling is deenergized.

Construction of the claimed emergency shutdown absorber rod drive of the control and protection system that includes an electric drive, a gearbox and a rack mechanism is made as a whole.

### List of drawings

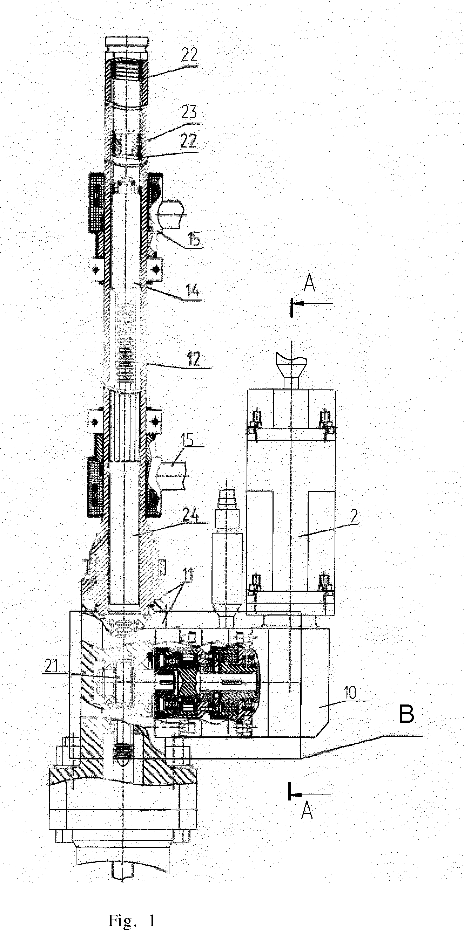

Fig. 1 illustrates a nuclear reactor emergency shutdown rod drive, sectional general view.

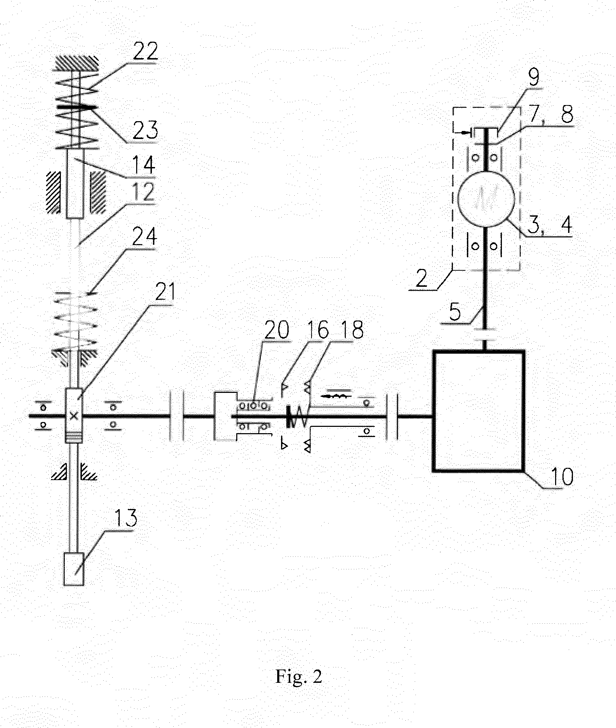

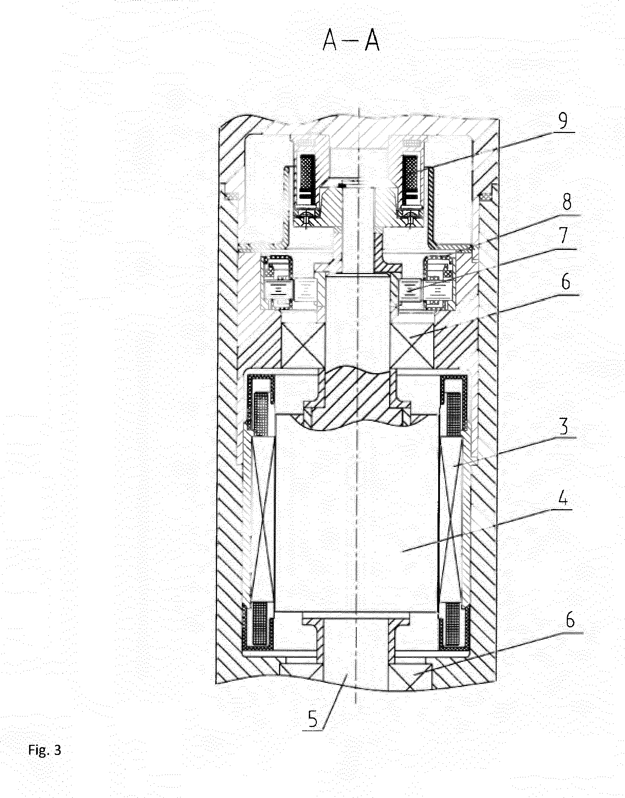

Fig. 2 illustrates the kinematic scheme of the emergency shutdown rod drive depicted a fig. 1.Fig. 3 illustrates section A-A of fig. 1.

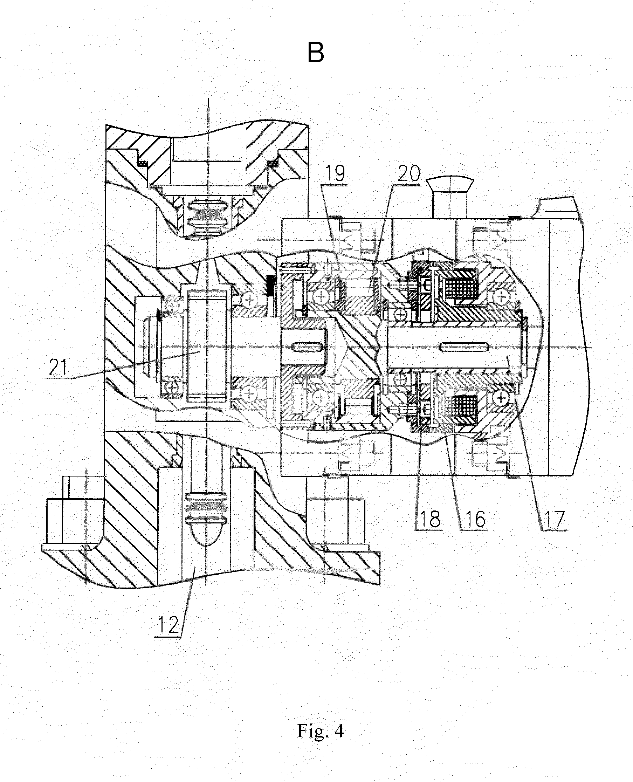

Fig. 4 illustrates location B of fig. 1.

### Embodiment

Emergency shutdown rod drive of the control and protection system is installed on the nuclear reactor stands. The drive includes electric drive 1 with electric motor stator 3 rigidly fixed in electric motor housing 2, and electric motor rotor installed on electric drive shaft 5 by means of two frictionless bearings 6. Rotor 7 is installed on the electric drive shaft with the transformer stator 8 fixed in the housing 2. The noncontact transformer serves as the electric motor rotor angular position sensor. Electromagnetic brake 9 and gearbox 10 are also installed on the electric drive shaft.

The rack mechanism consists of housing 11, gear-type rack 12 is installed along the housing axis. Absorber rod 13 is fixed at the end of gear-type rack 12. Magnet 14 is installed in the upper part of gear-type rack 12; the magnet is simultaneously a guide rail of gear-type rack 12. Magnet 14 sends signals to inductive limit switches 15 installed outside the housing 11. The gear-type rack 12 axis is parallel to the electric drive axis.

Electromagnetic coupling 16 is installed on rack mechanism shaft 17, the electromagnetic coupling housing is fixed to prevent rotation. Here, gear-type half-coupling 18 is fixed on the input element of the electromagnetic coupling, and it serves as the overspeed coupling 19 holder. Overspeed coupling hub 20 is fixed on the shaft.

The rotation moment is transferred through gearbox 10 and the clutched half-couplings of coupling 16 to rack gear 21.

Discharge spring 22 of gear-type rack 12 and absorber rod 13 of the control and protection system are located above gear-type rack 12. The upper edge of discharge spring 22 of the gear-type rack thrusts against the rack mechanism housing cover, at that lower edge of the spring thrusts against the magnet 14 case. Discharge spring 22 of the gear-type rack consists of several springs, divided from one another by special liners 23. Damper 24 is installed in rack mechanism housing 11.

The device operates as follows:lf an emergency protection signal appears, absorber rod 13 of the control and protection system is introduced into the core, while the electric drive is switched on for descent. When the shaft operates for descent the moment of rotation is transferred through gearbox 10 and the clutched half-couplings of coupling 16 to rack gear 21 that transforms rotating motion to reciprocating one.

When absorber rod 13 reaches the level of lower limit switch 15, the electric drive is switched off. Here, the brake
coupling is deenergized and the motor shaft is stopped, thus preventing upward movement of gear-type rack 12 and absorber rod 13 of the control and protection system.

When an emergency protection signal appears, electromagnetic clutch coupling 16 is deenergized, the movable part of the electromagnetic clutch coupling is disconnected by the membrane spring installed in the electromagnetic coupling housing, the kinematic circuit between rack mechanism shaft 17 and the electric drive shaft 5 is broken. As a result of kinematic connection breaking gear-type rack 12 and absorber rod 13 of the control and protection system are thrown to the nuclear reactor core by gravity and by means of spring 22. At that the spring is released at full length of the absorber rod immersion, thus ensuring minimum time for its introduction, and the overspeed coupling excludes absorber rod 13 jump caused by the hit.

The drive kinematics allows throwing the absorber rod from any intermediate position.

In case of activation of absorber rod 13 of the control and protection system (in case an emergency protection signal appears when the device is fully deenergized) the sequence of the process of lifting from the lower position to the higher inductive limit switch 15 is as follows. Inductive limit switches 15 and the electromagnetic clutch coupling 16 are energized. The kinematic circuit that transfers motion to the rack gear 21 from the motor through the gearbox 10 is closed. The electric drive is switched on for ascend. Whereat the overspeed coupling is not operational, as its hub 20 and holder 19 are rotating synchronously. Rack gear 12 and absorber rod 13 of the control and protection system motion are carried out until they reach the level of upper limit switch. After that the electric drive is switched off. At that the brake coupling 9 is also deenergized, the electric drive 5 shaft is stopped, and slipping down absorber rod 13 of the control and protection system is excluded.

It is necessary to switch on electromagnetic clutch coupling 16 during lifting of absorber rod 13 of the control and protection system in case of its introduction without power supply violation. Motion of absorber rod 13 of the control and protection system is performed in the similar mode as described above.

So, the claimed construction of the emergency shutdown rod drive of the control and protection system allows increasing the construction reliability, decrease the time of negative reactivity introduction to the core in case of emergencies, it significantly increases safety and reliability of the reactor plant as a whole.

## Claims

1. The emergency shutdown rod drive of a nuclear plant that includes an electric drive (1), a gearbox (10) and a rack mechanism, at that the electric drive (1) contains the electric motor installed in the electric drive housing with the electric motor rotor proximity sensor, the gearbox (10) for changing the rotation frequency of the electric drive (1) in order to gain the required speed and power characteristics of the drive, a gear-type rack (12) is installed at the rack mechanism axis in order to ensure reciprocating motion of the absorbing rod of the control and protection system using a rack gear; a clutch gear-type electromagnetic coupling with noncontact current lead with possibility of rigid synchronous mechanic clutching of the half-couplings is installed at the inlet shaft of the mechanism, at that the drive (1) includes the reverse motion coupling that is kinematically connected with the rack gear in order to exclude the rack jump during the discharges, the spring (22) of the gear-type rack (12) discharge and the gear-type (12) rack proximity sensors, **characterized in that** electromagnetic brake (9) of normally closed type is installed at the electric drive shaft (5).

2. The drive as claimed in claim 1 **characterized in that** the electric motor is made as noncontact permanent magnet motor.

3. The drive as claimed in claim 1 **characterized in that** the electric motor rotor proximity sensor is made as noncontact.

4. The drive as claimed in claim 3 **characterized in that** noncontact-rotating transformer of sine-cosine type serves as an electric motor rotor proximity sensor.

5. The as claimed in claim 1 **characterized in that** a high-coercivity magnet is installed in the upper part of the rack.

6. The drive as claimed in claim 1 **characterized in that** by that the electric drive axis is parallel to the gear-type rack (12) axis.

7. The drive as claimed in claim 1 **characterized in that** by that the internal space of the emergency shutdown drive is made leak-proof.

8. The drive as claimed in claim 1 **characterized in that** electric equipment of the drive does not contain any movable electric contacts.

9. The drive as claimed in claim 1 **characterized in that** the spring (22) of the rack discharge is installed above the gear-type rack (12).

10. The drive as claimed in claim 9 **characterized in that** the spring (22) of the rack discharge can be made of several components.

11. The drive as claimed in claim 1 **characterized in that** sensors of inductive (noncontact) type are used as the gear-type rack (12) proximity sensors.

## Patentansprüche

1. Die Notabschaltungsantriebsstange eines Atomkraftwerks, die aus einem Elektroantrieb (1), einem Getriebekasten (10) einem Zahnstangenmechanismus besteht, dabei enthält der Elektroantrieb (1) den Elektromotor, der im Gehäuse des Elektroantriebes installiert ist, mit dem Näherungssensor des Rotors des Elektroantriebes, dem Getriebekasten (10) für die Änderung der Drehfrequenz des Elektroantriebes (1) um die notwendige Geschwindigkeit und die Leistungsparameter des Antriebes zu erreichen; die getriebeartige Zahnstange (12) ist an der Achse des Zahnstangenmechanismus installiert, um die Wechselbewegung des Absorbierungsstabs des Regel-und Schutzsystems durch die Benutzung von der Zahnstange zu gewährleisten; die kupplungszahnradartige elektromagnetische Kupplung mit der kontaktlosen Stromzuführung mit der Möglichkeit einer starren und simultanen Kupplung der Kupplungshälften ist an der Einlaufschacht des Mechanismus installiert, dabei umfasst der Antrieb (1) die Rückwärtskupplung, die mit der Zahnstange kinematisch verbunden ist, damit der Absprung des Zahnrads bei der Entlastung ausgeschlossen wird, die Entlastung der Feder (22) der getriebeartigen Zahnstange (12) und die getriebeartigen Näherungssensoren der Zahnstange (12), **gekennzeichnet durch** die Lage der elektromagnetischen Bremse (9) des standardmäßig geschlossenen Typs an der Welle des Elektroantriebes (5).

2. Der Antrieb ist wie im Claim 1 angegeben, **dadurch gekennzeichnet, dass** der Elektromotor als der kontaktlose Permanent-Magnet-Motor gemacht ist.

3. Der Antrieb ist wie im Claim 1 angegeben, **dadurch gekennzeichnet, dass** der Sensor des Rotos des Elektromotors kontaktlos gemacht ist.

4. Der Antrieb ist wie im Claim 3 angegeben, **dadurch gekennzeichnet, dass** der kontaktlose rotierende Transformator des Sinus-Kosinus-Typs als Näherungssensor des Rotors des Elektromotors fungiert.

5. Der Antrieb ist wie im Claim 1 angegeben, **dadurch gekennzeichnet, dass** der Magnet der hohen Koerzitivfeldstärke im oberen Teil der Zahnstange installiert ist.

6. Der Antrieb ist wie im Claim 1 angegeben, **dadurch gekennzeichnet, dass** die Achse des Elektroantriebs parallel zur Achse der getriebeartigen Zahnstange (12) verläuft.

7. Der Antrieb ist wie im Claim 1 angegeben, **dadurch gekennzeichnet, dass** der innere Raum des Notabschaltungsantriebes auslaufsicher gemacht wurde.

8. Der Antrieb ist wie im Claim 1 angegeben, **dadurch gekennzeichnet, dass** die elektrische Ausrüstung des Antriebs keine beweglichen elektrischen Kontakte enthält.

9. Der Antrieb ist wie im Claim 1 angegeben, **dadurch gekennzeichnet, dass** die Feder (22) der Entlastung der Zahnstange über der getriebeartigen Zahnstange (12) installiert ist.

10. Der Antrieb ist wie im Claim 9 angegeben, **dadurch gekennzeichnet, dass** die Feder (22) der Entlastung der Zahnstange aus mehreren Komponenten gemacht werden kann.

11. Der Antrieb ist wie im Claim 1 angegeben, **dadurch gekennzeichnet, dass** die Sensoren des induktiven (kontaktlosen) Typs als Näherungssensoren der antriebsartigen Zahnstange (12) benutzt werden.

## Revendications

1. Le mécanisme d'entraînement de la barre d'arrêt d'urgence d'un réacteur nucléaire, qui inclut une transmission électrique (1), un réducteur (10) et un mécanisme de crémaillère, en même temps la transmission électrique (1) inclut l'électromoteur, installé dans le corps de la transmission électrique, avec le capteur de proximité du rotor de l'électromoteur, le réducteur (10) pour changer la vitesse de rotation de la transmission électrique (1) pour obtenir les caractéristiques de vitesse et de puissance requises du mécanisme d'entraînement, la crémaillère à fuseaux (12) est installée sur l'arbre du mécanisme de la crémaillère pour assurer le mouvement de va-et-vient de la barre absorbante du système de commande et de protection avec utilisation de la crémaillère à fuseaux ; le coupleur électromagnétique pour l'accouplement avec l'arrivé de courant sans contact, avec la possibilité de l'embrayage rigide synchrone mécanique des demi-accouplements, est installé sur l'arbre d'entrée du mécanisme, en même temps la transmission (1) inclut le coupleur inverse de mouvement, qui est liée d'une manière cinématique avec la crémaillère à fuseaux, pour exclure le sursaut de la crémaillère au cours des décharges, le ressort (22) de la crémaillère à fuseaux (12) et les capteurs de proximité de la crémaillère à fuseaux (12), qui se caractérisent par ce que le frein électrique (9) de type normal fermé est installé sur l'arbre de la transmission électrique (5).

2. La transmission décrite selon le point 1, différenciée par ce que l'électromoteur est réalisé en forme d'électromoteur sans contact à aimant permanent.

3. La transmission décrite selon le point 1, différenciée par ce que le capteur de proximité du rotor de l'électromoteur est réalisé en forme sans contact.

4. La transmission décrite selon le point 3, différenciée par ce que le transformateur tournant de type sinus-cosinus est utilisé en qualité de capteur de proximité du rotor de l'électromoteur.

5. La transmission décrite selon le point 1, différenciée par ce que l'aimant à haute coercibilité est installé dans la partie supérieure du cadre.

6. La transmission décrite selon le point 1, différenciée par ce que l'axe de la transmission électrique est parallèle à l'axe de la crémaillère à fuseaux (12).

7. La transmission décrite selon le point 1, différenciée par ce que l'espace intérieur du mécanisme d'entraînement de l'arrêt d'urgence est réalisé étanche.

8. La transmission décrite selon le point 1, différenciée par ce que les équipements électriques de la transmission ne contiennent pas de contacts électriques mobiles.

9. La transmission décrite selon le point 1, différenciée par ce que le ressort (22) de décharge de la crémaillère est installé au-dessus de la crémaillère à fuseaux (12).

10. La transmission décrite selon le point 9, différenciée par ce que le ressort (22) de décharge de la crémaillère peut être réalisé à partir de plusieurs composants.

11. La transmission décrite selon le point 1, différenciée par ce que les capteurs de type inductif (sans contact) sont utilisés en qualité de capteurs de proximité de la crémaillère à fuseaux (12).
